# EUROPEAN PATENT APPLICATION

(11) **EP 4 672 707 A1**
(43) Date of publication of application: **31.12.2025**
(21) Application number: 24216337.6
(22) Date of filing: 29.11.2024
(51) Int. Cl.: H04L 45/28, H04L 45/00, H04L 45/655, H04L 47/125, H04L 45/02

(54) **METHOD AND APPARATUS FOR HANDLING LINK FAILURE, STORAGE MEDIUM, AND PROGRAM PRODUCT**

(30) Priority: 26.06.2024 CN 202410841394
(71) Applicant: New H3C Technologies Co., Ltd., Hangzhou, Zhejiang 310052 (CN)
(72) Inventor: YAN, Feng, Beijing, 100102 (CN); ZHAO, Jun, Beijing, 100102 (CN)
(74) Representative: 2SPL Patentanwälte PartG mbB

(57) **Abstract**

The present disclosure relates to a technical field of intelligent computing centers, and particularly to methods and apparatuses for handling a link failure, a storage medium, and a program product. The method is performed by a target network apparatus in a forwarding path in a networking to forward a target flow based on flow entries; where each of network apparatuses in the networking advertises or forwards a host route of a computing resource accessed by the networking to other network apparatuses in the networking based on a dynamic routing protocol; where the method includes: receiving a first flow entry sent by a controller, where the first flow entry is for forwarding the target flow, and the first flow entry includes a source network address, a destination network address, an egress interface, and information of a next hop apparatus of the target flow; monitoring a status of a link associated with the first flow entry; deleting the first flow entry in response to detecting that the link associated with the first flow entry faults; and forwarding the target flow based on the destination network address of the target flow and a dynamic routing entry.

## Description

### TECHNICAL FIELD

The present disclosure relates to a technical field of intelligent computing centers, and particularly to methods and apparatuses for handling a link failure, a storage medium, and a program product.

### BACKGROUND

With publishing of various large artificial intelligence (AI) models, needs for the intelligent computing centers have increased quickly, and a new wave of development in the AI technology has been quickly sparked. The industry has an urgent need for training larger-scale AI models. This poses new requirements for performances of data center networks that support basic training.

Compared to general computing, a traffic model trained by the AI is characterized by a high single-flow bandwidth and a low number of flows. A traditional equal-cost multi-path (ECMP) traffic balancing mechanism may lead to uneven traffic distribution on links due to an ECMP hashing mechanism. That is, some links may have full throughput, even congestion and packet loss, while some other links may be idle. This results in reduced network throughput and a lower service performance of an AI cluster.

### SUMMARY

The present disclosure presents methods and apparatuses for handling a link failure, a storage medium, and a program product.

In a first aspect, the present disclosure provides a method for handling a link failure, performed by a target network apparatus which is in a networking and included in a forwarding path for forwarding a target flow based on flow entries; where each of network apparatuses in the networking advertises or forwards a host route of a computing resource accessed by the networking to other network apparatuses in the networking based on a dynamic routing protocol; where the method includes: receiving a first flow entry sent by a controller, where the first flow entry is for forwarding the target flow, and the first flow entry includes a source network address, a destination network address, an egress interface, and information of a next hop apparatus of the target flow; monitoring a status of a link associated with the first flow entry; deleting the first flow entry in response to detecting that the link associated with the first flow entry faults; and forwarding the target flow based on the destination network address of the target flow and a dynamic routing entry.

In some examples, the method further includes: sending, in response to determining that a route to the next hop apparatus is unreachable, an instruction to a previous hop apparatus in the forwarding path, so that the previous hop apparatus deletes a second flow entry for forwarding the target flow and forwards the target flow based on the destination network address of the target flow and a dynamic routing entry.

In a second aspect, the present disclosure provides a method for handling a link failure, performed by a controller that enables each of network apparatuses in a networking to advertise or forward a host route of a computing resource accessed by the networking to other network apparatuses in the networking based on a dynamic routing protocol; where the method includes: determining information of a target flow to be processed, where the information of the target flow includes a source network address and a destination network address of the target flow; determining, based on a network-wide topology and quality information of respective links, a forwarding path for forwarding the target flow, where the forwarding path includes M target network apparatuses and M-1 target links constructed by the M target network apparatuses; and sending a forwarding flow entry to each of the M target network apparatuses, so that each of the M target network apparatuses forwards the target flow based on the forwarding flow entry, and forwards, in response to determining that a target link associated with a local forwarding flow entry faults, the target flow through the destination network address of the target flow and a dynamic routing entry; where the forwarding flow entry includes the source network address, the destination network address, an egress interface, and information of a next hop apparatus of the target flow.

In some examples, the process of determining the information of the target flow to be processed includes: obtaining information of a mutual access traffic of a first artificial intelligence (AI) training task; and determining the mutual access traffic of the first AI training task as the target flow to be processed, where information of a mutual access traffic of an AI training task includes source computing resource network address information and destination computing resource network address information of the AI training task; or receiving information of a long tail latency task reported by the computing resource; and determining a mutual access traffic of the long tail latency task as the target flow to be processed, where in a case that a network interface card (NIC) of the computing resource detects a long tail latency of a second AI training task, the computing resource reports the information of the long tail latency task to the controller, and the information of the long tail latency task includes source computing resource network address information and destination computing resource network address information in the second AI training task.

In a third aspect, the present disclosure provides an apparatus for handling a link failure, applied to a target network apparatus which is in a networking and included in a forwarding path for forwarding a target flow based on flow entries; where each of network apparatuses in the networking advertises or forwards a host route of a computing resource accessed by the networking to other network apparatuses in the networking based on a dynamic routing protocol; where the apparatus includes: a receiving module, to receive a first flow entry sent by a controller, where the first flow entry is for forwarding the target flow, and the first flow entry includes a source network address, a destination network address, an egress interface, and information of a next hop apparatus of the target flow; a monitoring module, to monitor a status of a link associated with the first flow entry; a deleting module, to delete the first flow entry in response to determining that the monitoring module monitors that the link associated with the first flow entry faults; and a forwarding module, to forward the target flow based on the destination network address of the target flow and a dynamic routing entry.

In some examples, the apparatus further includes a determination module and a sending module: where in response to determining, by the determination module, that a route to the next hop apparatus is unreachable, the sending module is to send an instruction to a previous hop apparatus in the forwarding path, so that the previous hop apparatus deletes a second flow entry for forwarding the target flow and forwards the target flow based on the destination network address of the target flow and a dynamic routing entry.

In a fourth aspect, the present disclosure provides an apparatus for handling a link failure, applied to a controller that enables each of network apparatuses in a networking to advertise or forward a host route of a computing resource accessed by the networking to other network apparatuses in the networking based on a dynamic routing protocol; where the apparatus includes: a first determination module, to determine information of a target flow to be processed, where the information of the target flow includes a source network address and a destination network address of the target flow; a second determination module, to determine, based on a network-wide topology and quality information of respective links, a forwarding path for forwarding the target flow, where the forwarding path includes M target network apparatuses and M-1 target links constructed by the M target network apparatuses; and a sending module, to send a forwarding flow entry to each of the M target network apparatuses, so that each of the M target network apparatuses forwards the target flow based on the forwarding flow entry, and forwards, in response to determining that a target link associated with a local forwarding flow entry faults, the target flow through the destination network address of the target flow and a dynamic routing entry; where the forwarding flow entry includes the source network address, the destination network address, an egress interface, and information of a next hop apparatus of the target flow.

In some examples, in response to determining that the information of the target flow to be processed, the first determination module is to: obtain information of a mutual access traffic of a first artificial intelligence (AI) training task; and determine the mutual access traffic of the first AI training task as the target flow to be processed, where information of a mutual access traffic of an AI training task includes source computing resource network address information and destination computing resource network address information of the AI training task; or receive information of a long tail latency task reported by the computing resource; and determine a mutual access traffic of the long tail latency task as the target flow to be processed, where in a case that a network interface card (NIC) of the computing resource detects a long tail latency of a second AI training task, the computing resource reports the information of the long tail latency task to the controller, and the information of the long tail latency task includes source computing resource network address information and destination computing resource network address information in the second AI training task.

In a fifth aspect, an example of the present disclosure provides an apparatus for handling a link failure, including: a memory, to storing program instructions; and a processor, to invoke the program instructions stored in the memory and execute processes of any one method in the first aspect based on the obtained program instructions.

In a sixth aspect, an example of the present disclosure also provides a computer-readable storage medium, storing computer executable instructions, where the computer executable instructions are to cause the processor to perform processes of any one method in the first aspect above.

In a seventh aspect, an example of the present disclosure provides an apparatus for handling a link failure, including: a memory, to store program instructions; and a processor, to invoke the program instructions stored in the memory and execute processes of any one method in the second aspect based on the obtained program instructions.

In an eighth aspect, an example of the present disclosure also provides a computer-readable storage medium, storing computer executable instructions, where the computer executable instructions are to cause the processor to perform processes of any one method in the second aspect above.

In a ninth aspect, an example of the present disclosure also provides a computer program product, including computer program instructions, where a computer executes the computer program instructions to implement processes of any one method in the first aspect above.

In a tenth aspect, an example of the present disclosure also provides a computer program product, including computer program instructions, where a computer executes the computer program instructions to implement processes of any one method in the second aspect above.

In summary, the method for handling a link failure provided in the examples of the present disclosure is performed by a target network apparatus which is in a networking and included in a forwarding path for forwarding a target flow based on flow entries; where each of network apparatuses in the networking advertises or forwards, based on a dynamic routing protocol, a host route of a computing resource accessed by the networking to other network apparatuses in the networking. The method includes: receiving a first flow entry sent by a controller, where the first flow entry is for forwarding the target flow, and the first flow entry includes a source network address, a destination network address, an egress interface, and information of a next hop apparatus of the target flow; monitoring a status of a link associated with the first flow entry; deleting the first flow entry in response to detecting that the link associated with the first flow entry faults; and forwarding the target flow based on the destination network address of the target flow and a dynamic routing entry.

By adopting the method for handling a link failure provided in the examples of the present disclosure, by a dual-layer forwarding protection mechanism, the forwarding flow entries is used preferentially for forwarding, and in response to determining that a link failure occurs, routing forwarding is switched to, thereby avoiding the risk of interruption of the AI training task during the link failure in a scenario of network-wide load balancing based on computing-network collaboration.

The network apparatus initiatively senses the link failure and initiatively deletes forwarding flow entries associated with failed links, which solves the problem of long-term packet loss caused by the common handling mechanism taking a long time during the link failure in the scenario of network-wide load balancing based on computing-network collaboration.

Furthermore, through the monitoring and sensing and initiative notification mechanism for a long tail latency task on the computing resource side, the SDN controller may sense the long tail latency task, and based on the global perspective of the controller, re-optimize and route the long tail delay task through an intelligent routing algorithm, thereby solving the problem of occurring easy link traffic congestion, greatly reducing the AI training efficiency and performance, caused by HASH polarization after switching to dynamic routing-based forwarding during the link failure in the scenario of network-wide load balancing based on computing-network collaboration. Ultimately, after the link failure and sensing recovery, the network-wide can still achieve high-throughput forwarding and improve greatly the AI training efficiency and performance.

### BRIEF DESCRIPTION OF DRAWINGS

To more clearly illustrate the technical solutions presented in the examples of the present disclosure or in the related art, the following provides a brief introduction to the drawings required for the description of the examples of the present disclosure or the related art. It is evident that the drawings described below are some examples recorded in the present disclosure. Those skilled in the art may also be obtain other drawings based on these drawings of the examples of the present disclosure.
FIG. 1 is a detailed flowchart of a method for handling a link failure according to an example of the present disclosure.
FIG. 2 is a schematic diagram of network-wide load balancing based on computing-network collaboration according to an example of the present disclosure.
FIG. 3 is a schematic diagram of switching forwarding manners based on computing-network collaboration according to an example of the present disclosure.
FIG. 4 is a detailed flowchart of another method for handling a link failure according to an example of the present disclosure.
FIG. 5 is a structural schematic diagram of an apparatus for handling a link failure according to an example of the present disclosure.
FIG. 6 is a structural schematic diagram of another apparatus for handling a link failure according to an example of the present disclosure.
FIG. 7 is a schematic diagram of a hardware architecture of an apparatus for handling a link failure according to an example of the present disclosure.
FIG. 8 is a schematic diagram of a hardware architecture of another apparatus for handling a link failure according to an example of the present disclosure.

### DETAILED DESCRIPTION

The terms used in the examples of the present disclosure are for the purpose of describing specific examples and are not intended to limit the present disclosure. The singular forms "a," "said," and "the" used in the present disclosure and the claims are also intended to include plural forms unless the context indicates otherwise. It should also be understood that the term "and/or" used herein refers to any or all possible combinations of one or more associated listed items.

It should be understood that although terms such as "first," "second," and "third" may be used in the examples of the present disclosure to describe various information, such information should not be limited by these terms. These terms are to distinguish a same type of information from each other. For example, without departing from the scope of the present disclosure, first information may also be referred to as second information, and similarly, the second information may be referred to as the first information. Depending on the context, the used word "if' may also be interpreted as "when," "while," or "in response to determining."

Because the traffic model trained by the AI is characterized by a high single-flow bandwidth and a low number of flows, the traditional ECMP traffic balancing mechanism may lead to uneven traffic distribution on links due to the ECMP hashing mechanism. That is, some links may have full throughput, even congestion and packet loss, while some other links may be idle. This results in reduced network throughput and a lower service performance of an AI cluster.

To solve the above issue, a network-wide load balancing solution based on computing-network collaboration is proposed, which includes the following. Before AI training, a UCCL (universal collection communication library, capable of supporting heterogeneous multi-vendor graphics processing unit (GPU)) running on a GPU server reports information of a mutual access traffic of an AI training task to an SDN (software-defined network) controller. Based on global information such as a network-wide topology, a link bandwidth, etc., the SDN controller selects an optimal end-to-end path including various forwarding apparatuses, for the training task, through an intelligent routing algorithm, to generate corresponding forwarding flow entries and send the forwarding flow entries to each forwarding apparatus, such that each forwarding apparatus forwards the training task traffic based on the flow entries, thereby achieving link load balancing in the network-wide level.

However, a link failure (such as an optical module failure, a cable failure, a switcher port failure, etc.) is a common failure manner. In response to determining that the switcher senses the link failure and notifies the link failure to the controller, the controller will delete forwarding flow entries corresponding to failed links, re-route the traffic, and re-send new forwarding flow entries. The failure handling process takes a long time, which causes disruptions in the AI training task for a long time, and reduces greatly the efficiency and performance of the AI training.

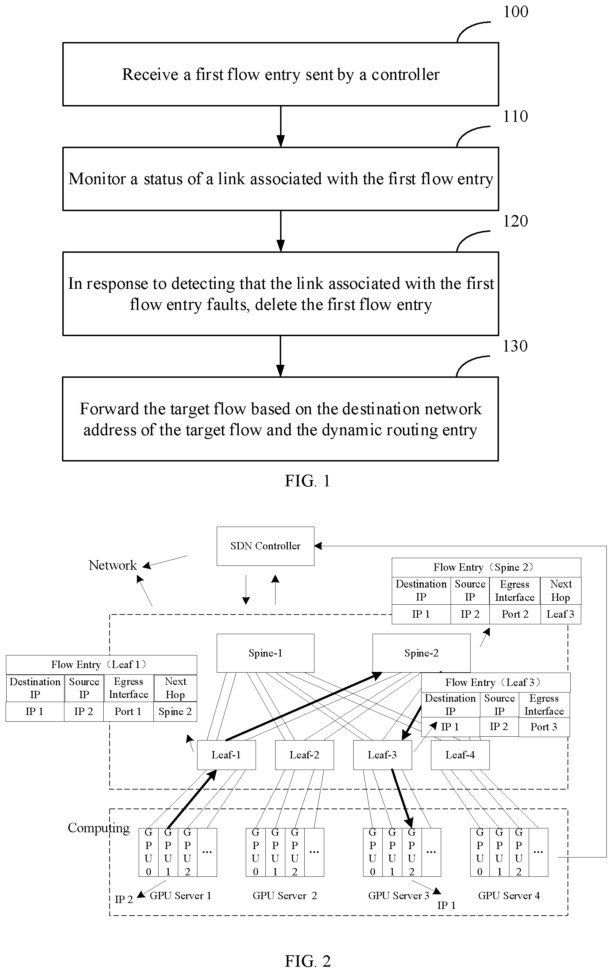

Referring to FIG. 1, FIG. 1 is a detailed flowchart of a method for handling a link failure according to an example of the present disclosure. The method is performed by a target network apparatus in a forwarding path for forwarding a target flow based on a flow entry in a networking. Each of network apparatuses in the networking advertises or forwards a host route of a computing resource accessed by the networking to other network apparatuses in the networking based on a dynamic routing protocol. The method includes the following processes 100-130.

At process 100, a first flow entry sent by a controller is received.

The first flow entry is for forwarding the target flow and includes a source network address, a destination network address, an egress interface, and information of a next hop apparatus of the target flow.

Referring to FIG. 2, FIG. 2 is a schematic diagram of network-wide load balancing based on computing-network collaboration according to an example of the present disclosure. In an AI cluster, an AI training parameter network is constructed by an SDN controller, spine switchers, and leaf switchers interconnected with each other. The traffic of each AI training task is transmitted through the AI training parameter network. A computing resource pool is constructed by several GPU servers. Taking the access of a GPU 1 on a GPU server 1 to a GPU 2 on a GPU server 3 as an example, it is set that the network address (e.g., an Internet protocol address (IP address)) of the GPU 2 on the GPU server 3 is IP 1, and the network address (e.g., an IP address) of the GPU 1 on the GPU server 1 is IP 2.

On the control plane, the processes of collecting training task information, performing global intelligent routing by the controller, and sending forwarding flow entries to the target network apparatus (e.g., a switcher) are as follows.
1. The SDN controller collects information, such as a network-wide topology, a link bandwidth, etc., through an SNMP (simple network management protocol) and a telemetry technology.
2. The GPU server notifies the information of the mutual access traffic of AI training tasks (e.g., the GPU 1 (IP: IP 2) on the GPU server 1 accessing the GPU 2 (IP: IP 1) on the GPU server 3) to an agent (an application program running on the GPU server for communicating with the SDN controller) through an rest application programming interface (RestAPI). The agent reports the information to the SDN controller.
3. Based on a global perspective and using the information, such as the network-wide topology, link bandwidth occupancy, etc., as an input for the intelligent routing algorithm, the SDN controller selects the optimal end-to-end forwarding path for the interconnected GPU NICs.
   That is, each of the target network apparatuses (e.g., a leaf 1 directly connected to the GPU 1 on the GPU server 1, a spine 2, and a leaf 3 directly connected to the GPU 2 on the GPU server 3) to forward the AI training task traffic, a target link between the GPU 1 on the GPU server 1 and the leaf 1, a target link between the leaf 1 and the spine 2, a target link between the spine 2 and the leaf 3, and a target link between the leaf 3 and the GPU 2 on the GPU server 3 (for example, links indicated by the bold arrows in the figure) are determined.
4. The SDN controller sends routing configuration information in the form of the forwarding flow entry to switchers, the leaf 1, the spine 2, and the leaf 3. For example, the specific format of the forwarding flow entry is shown in FIG. 2. It should be noted that the forwarding flow entry includes the destination IP address, the source IP address, the egress interface, and the next hop apparatus. In response to determining that the target network apparatus is connected directly to the destination, the forwarding flow entry may not include the information of a next hop apparatus.

On the forwarding plane, the network interface card (NIC) of the GPU 1 on the GPU server 1 sends a packet with a destination IP of IP 1 and a source IP of IP 2, and the packet is forwarded to the switcher leaf 1 connected to the NIC. The leaf 1 looks up the forwarding flow entry of the leaf 1 for forwarding, matches the source and the destination IP, and sends the packet out of the corresponding egress interface, and the packet is forwarded to the next hop apparatus, spine 2. The spine 2 looks up the forwarding flow entry of the spine 2 for forwarding, matches the source and the destination IP, and sends the packet out of the corresponding egress interface, and the packet is forwarded to the next hop apparatus, leaf 3. The leaf 3 looks up the forwarding flow entry of the leaf 3 for forwarding, matches the source and the destination IP, and sends the packet out of the corresponding egress interface, and then the packet reaches the GPU 2 on the destination GPU server 3. The NIC may be an intelligent NIC.

In the example of the present disclosure, a dynamic routing protocol is enabled on the AI training parameter network constructed by the spines and the leaves. The host route for each of the various GPU NICs on the GPU server are advertised from the access-side leaf to the spine through the dynamic routing protocol, and then the host route is advertised by the spine to the remote leaf through the dynamic routing protocol, such that the mutual access traffic between GPU NICs may be forwarded by the dynamic routing.

In practical applications, for a single-tenant scenario, the underlay routing protocol is enabled on the leaf and spine switchers, such as a BGP (border gateway protocol), IS-IS (intermediate system to intermediate system), or OSPF (open shortest path first). The host route from the GPU 1 (IP: IP 2) on the GPU server 1 to the GPU 2 (IP: IP 1) on the GPU server 3 is notified to each of switchers in the leaf-spine networking.

For a multi-tenant scenario, the underlay routing protocol is enabled between the leaf and spine switchers, such as the BGP, IS-IS, or OSPF, to achieve network reachability between the switchers. Interconnection between GPU NICs serves as the service network, with a VxLAN (virtual extensible local area network) enabled on the switcher forwarding plane and an EVPN (Ethernet virtual private network) protocol enabled on the switcher controller plane. The host route from the GPU 1 (IP: IP 2) on the GPU server 1 to the GPU 2 (IP: IP 1) on the GPU server 3 is notified to the remote spine and leaf switchers through the EVPN.

Thus, the target network apparatuses include both forwarding flow entries for forwarding the AI training task traffic and dynamic routing entries for forwarding the AI training task traffic. The forwarding flow entries have higher priority than the dynamic routing entries, so the forwarding flow entries are used preferentially to forward the AI training task traffic.

At process 110, a status of a link associated with the first flow entry is monitored.

The link associated with the flow entry refers to the selected forwarding link in response to determining that the flow entry is used for forwarding. In the examples of the present disclosure, each target network apparatus monitors the status of the link associated with the flow entry, such as monitoring optical module failures, cable failures, and switcher port failures. That is, whether the link is available is monitored.

At process 120, in response to detecting that the link associated with the first flow entry faults, the first flow entry is deleted.

In response to determining that the target network apparatus monitors a failed status of a link associated with a local flow entry, the target network apparatus deletes the flow entry, meaning that the flow entry is no longer to forward the corresponding traffic.

At process 130, the target flow is forwarded based on the destination network address of the target flow and a dynamic routing entry.

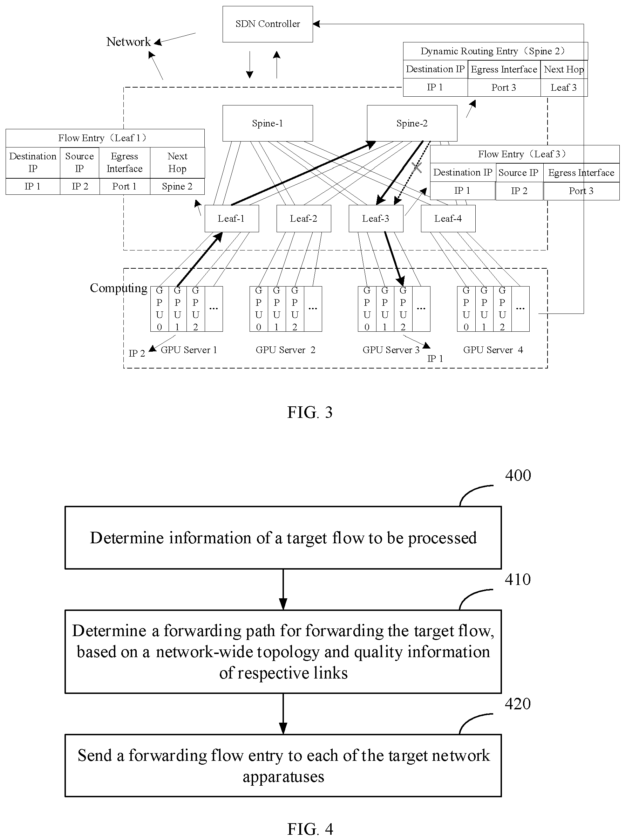

For example, referring to FIG. 3, FIG. 3 is a schematic diagram of switching forwarding manners based on computing-network collaboration according to an example of the present disclosure. In response to determining that a link failure occurs on the link associated with the forwarding flow entry between the spine 2 and the leaf 3, the spine 2 hardware senses the link failure.

At the point, the spine 2 initiatively deletes all forwarding flow entries associated with the failed link. In practical applications, the dynamic routing corresponding to the link (egress interface) will also be deleted; that is, the forwarding mode of the spine 2 switcher switches from the forwarding mode based on the forwarding flow entry to the forwarding mode based on the dynamic routing, and the forwarding is performed based on the dynamic routing entry. In response to determining that there are other normal links between the spine 2 and the leaf 3 besides the failed link, the spine 2 forwards the traffic based on the dynamic routing corresponding to the normal links. As shown in FIG. 3, there are two links between the spine 2 and the leaf 3. In response to determining that the link associated with the forwarding flow entry faults, a related service traffic may be forwarded based on the dynamic routing entry corresponding to the other link, thereby achieving the uninterrupted service traffic while the link failure. In response to determining that there are no other normal links between the spine 2 and the leaf 3 besides the failed link, the spine 2 sends a message to the previous hop apparatus (leaf 1) to delete the forwarding flow entry corresponding to the related service traffic, to instruct the previous hop apparatus leaf 1 to also switch to forwarding based on the dynamic routing entry. In this way, even though a link failure occurs, the service traffic remains uninterrupted.

In practical applications, in response to determining that the target network apparatuses forward the traffic based on the dynamic routing after the link failure, link congestion is prone to occur. In the examples of the present disclosure, optimal adjustment of the link load may be achieved through the coordinated monitoring and sensing of the long tail latency training task by the SDN controller and GPU NICs, achieving the load balancing and high throughput for network-wide links. The specific process is as follows.

The GPU NIC discovers a long tail latency task through RTT (round trip time) probing. The GPU NIC notifies the information of the long tail latency task (including a source IP and a destination IP) to the agent, and the agent reports the information of the long tail latency to the SDN controller. The SDN controller uses, in combination with the information of the long tail latency task reported by the agent and based on real-time obtained information such as the network-wide topology, the link bandwidth occupancy, etc., an intelligent routing algorithm to reselect an optimal end-to-end forwarding path between the interconnected GPU NICs for the long tail latency task. The SDN controller sends the routing configuration information to the switchers on the optimal forwarding path in the form of forwarding flow entries.

For example, referring to FIG. 4, FIG. 4 is a detailed flowchart of a method for handling a link failure according to an example of the present disclosure. The method is performed by a controller that enables each of network apparatuses in a networking to advertise or forward a host route of a computing resource accessed by the networking to other network apparatuses in the networking based on a dynamic routing protocol. The method includes following processes 400-420.

At process 400, information of a target flow to be processed is determined.

The information of the target flow includes the source network address and destination network address of the target flow.

In the example of the present disclosure, in response to determining the information of the target flow to be processed, a preferred example is as follows.

The information of the mutual access traffic of the first AI training task is obtained, and the mutual access traffic of the first AI training task is determined as the target flow to be processed. Information of a mutual access traffic of an AI training task includes source computing resource network address information and destination computing resource network address information in the AI training task.

In response to determining the information of the target flow to be processed, another preferred example is as follows.

Information of a long tail latency task reported by the computing resource is received; and a mutual access traffic of the long tail latency task is determined as the target flow to be processed, where in a case that a network interface card (NIC) of the computing resource detects a long tail latency of a second AI training task, the computing resource reports the information of the long tail latency task to the controller, and the information of the long tail latency task includes source computing resource network address information and destination computing resource network address information in the second AI training task.

At process 410, a forwarding path for forwarding the target flow is determined, based on a network-wide topology and quality information of respective links.

The forwarding path includes M target network apparatuses and M-1 target links constructed by the M target network apparatuses, where M is a positive integer.

At process 420, a forwarding flow entry is sent to each of the target network apparatuses.

In the example of the present disclosure, each target network apparatus forwards the target flow based on the forwarding flow entry, and in response to determining that the target link associated with the local forwarding flow entry faults, the target network apparatus forwards the target flow through the destination network address of the target flow and a dynamic routing entry. The forwarding flow entry includes a source network address, a destination network address, an egress interface, and information of a next hop apparatus of the target flow.

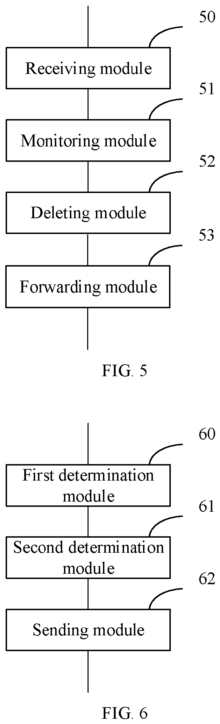

Based on the same inventive concept as the example of the method performed by network apparatus described above, referring to FIG. 5, FIG. 5 is a structural schematic diagram of an apparatus for handling a link failure according to an example of the present disclosure. The apparatus is applied to a target network apparatus which is in a networking and included in a forwarding path for forwarding a target flow based on flow entries; where each of network apparatuses in the networking advertises or forwards, based on a dynamic routing protocol, a host route of a computing resource accessed by the networking to other network apparatuses in the networking. The apparatus includes: a receiving module 50, a monitoring module 51, a deleting module 52, and a forwarding module 53.

The receiving module 50 is to receive a first flow entry sent by a controller, where the first flow entry is for forwarding the target flow, and the first flow entry includes a source network address, a destination network address, an egress interface, and information of a next hop apparatus of the target flow.

The monitoring module 51 is to monitor a status of a link associated with the first flow entry.

The deleting module 52 is to delete the first flow entry in response to determining that the monitoring module monitors that the link associated with the first flow entry faults.

The forwarding module 53 is to forward the target flow based on the destination network address of the target flow and a dynamic routing entry.

In some examples, the apparatus further includes a determination module and a sending module.

In response to determining, by the determination module, that a route to the next hop apparatus is unreachable, the sending module is to send an instruction to a previous hop apparatus in the forwarding path, so that the previous hop apparatus deletes a second flow entry for forwarding the target flow and forwards the target flow based on the destination network address of the target flow and a dynamic routing entry.

Based on the same inventive concept as the example of the method performed by the controller described above, referring to FIG. 6, FIG. 6 is a structural schematic diagram of an apparatus for handling a link failure according to an example of the present disclosure. The apparatus is applied to a controller that enables each of network apparatuses in a networking to advertise or forward a host route of a computing resource accessed by the networking to other network apparatuses in the networking based on a dynamic routing protocol. The apparatus includes: a first determination module 60, a second determination module 61, and a sending module 62.

The first determination module 60 is to determine information of a target flow to be processed, where the information of the target flow includes a source network address and a destination network address of the target flow.

The second determination module 61 is to determine, based on a network-wide topology and quality information of respective links, a forwarding path for forwarding the target flow, where the forwarding path includes M target network apparatuses and M-1 target links constructed by the M target network apparatuses.

The sending module 62 is to send a forwarding flow entry to each of the M target network apparatuses, so that each of the M target network apparatuses forwards the target flow based on the forwarding flow entry, and forwards, in response to determining that a target link associated with a local forwarding flow entry faults, the target flow through the destination network address of the target flow and a dynamic routing entry; where the forwarding flow entry includes the source network address, the destination network address, an egress interface, and information of a next hop apparatus of the target flow.

In some examples, in response to determining the information of the target flow to be processed, the first determination module 60 is to:
obtain information of a mutual access traffic of a first artificial intelligence (AI) training task and determine the mutual access traffic of the first AI training task as the target flow to be processed, where information of a mutual access traffic of an AI training task includes source computing resource network address information and destination computing resource network address information of the AI training task; or
receive information of a long tail latency task reported by the computing resource; and determine a mutual access traffic of the long tail latency task as the target flow to be processed, where in a case that a network interface card (NIC) of the computing resource detects a long tail latency of a second AI training task, the computing resource reports the information of the long tail latency task to the controller, and the information of the long tail latency task includes source computing resource network address information and destination computing resource network address information in the second AI training task.

The aforementioned modules may be one or more integrated circuits configured to implement the aforementioned methods, such as one or more application specific integrated circuits (ASICs), or one or more digital signal processors (DSPs), or one or more field programmable gate arrays (FPGAs), etc. For example, in response to determining that a certain module is implemented in the form of processing element scheduling program code, the processing element may be a general-purpose processor, such as a central processing unit (CPU) or other processors that may invoke program codes. For example, these units may be integrated together and implemented in the form of a system-on-chip (SOC).

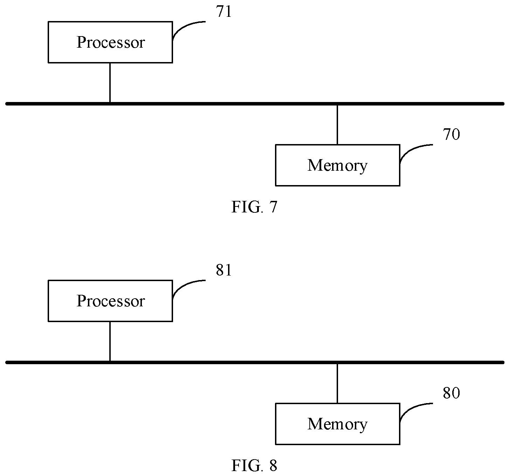

Furthermore, from the hardware perspective, a schematic diagram of a hardware architecture of the apparatus for handling a link failure provided in the examples of the present disclosure may be seen in FIG. 7. The apparatus for handling a link failure may include: a memory 70 and a processor 71.

The memory 70 is to store program instructions, and the processor 71 invokes the program instructions stored in the memory 70 and executes the example of the aforementioned method performed by a network apparatus based on the obtained program instructions. The specific examples and technical effects are similar and will not be repeated here.

In some examples, the present disclosure also provides a network apparatus, including at least one processing element (or chip) for executing the example of the aforementioned method performed by the network apparatus.

In some examples, the present disclosure also provides a program product, such as a computer-readable storage medium, which stores computer executable instructions for causing the computer to execute the example of the aforementioned method performed by the network apparatus.

Furthermore, from the hardware perspective, a schematic diagram of a hardware architecture of the apparatus for handling a link failure provided in the examples of the present disclosure may also be seen in FIG. 8. The apparatus for handling a link failure may include: a memory 80 and a processor 81.

The memory 80 is to store program instructions, and the processor 81 invokes the program instructions stored in the memory 80 and executes the example of the aforementioned method performed by a controller based on the obtained program instructions. The specific examples and technical effects are similar and will not be repeated here.

In some examples, the present disclosure also provides a controller, including at least one processing element (or chip) for executing the example of the aforementioned method performed by the controller.

In some examples, the present disclosure also provides a program product, such as a computer-readable storage medium, which stores computer executable instructions for causing the computer to execute the example of the aforementioned method performed by the controller.

Here, the computer-readable storage medium may be any electronic, magnetic, optical, or other physical storage apparatus capable of containing or storing information, such as executable instructions, data, etc. For example, the computer-readable storage medium may be an RAM (random access memory), a volatile memory, a non-volatile memory, a flash memory, a storage drive (such as a hard disk drive), a solid-state drive, any type of storage disk (such as an optical disk, a DVD, etc.), or a similar storage media, or combinations of them.

The systems, apparatuses, modules, or units described in the aforementioned examples may be implemented by computer chips or entities, or by products with certain functions. A typical example apparatus is a computer, which may be in the form of a personal computer, a laptop, a cellular phone, a camera phone, a smartphone, a personal digital assistant, a media player, a navigation apparatus, an email transceiving apparatus, a game console, a tablet computer, a wearable apparatus, or a combination of any of these apparatuses.

For the convenience of description, the above apparatuses are divided into various units and described separately in terms of their functions. Of course, for implementing the present disclosure, the functions of the modules may be implemented in one or more software and/or hardware.

Those skilled in the art should understand that the examples of the present disclosure may be provided as methods, systems, or computer program products. Therefore, the present disclosure may take the form of a complete hardware example, a complete software example, or an example combining software and hardware aspects. Moreover, the examples of the present disclosure may be implemented in the form of a computer program product on one or more computer-usable storage media (including but not limited to a disk memory, a CD-ROM, an optical memory, etc.) that contain computer-usable program codes.

The present disclosure is described with reference to flowcharts and/or block diagrams of methods, apparatuses (systems), and computer program products in examples of the present disclosure. It should be understood that each flow and/or block in the flowchart and/or block diagram, and combinations of flows and/or blocks in the flowchart and/or block diagram, may be implemented by computer program instructions. These computer program instructions may be provided to a general-purpose computer, a special-purpose computer, an embedded processor, or a processor of other programmable data processing apparatus to produce a machine, such that the instructions, which are executed by the computer or the processor of other programmable data processing apparatus, create an apparatus for implementing functions specified in one or more flows in the flowchart and/or one or more blocks in the block diagram.

Moreover, these computer program instructions may be stored in a computer-readable memory that may direct a computer or other programmable data processing apparatus to work in a particular manner, such that the instructions stored in the computer-readable memory produce an article of manufacture including instruction apparatuses that implements the functions specified in one or more flows in the flowchart and/or one or more blocks in the block diagram.

These computer program instructions may also be loaded onto a computer or other programmable data processing apparatus, such that the computer or other programmable apparatus performs a series of operational processes to produce a computer-implemented process. Therefore, the instructions executed on the computer or other programmable apparatus provide processes for implementing the functions specified in one or more flows in the flowchart and/or one or more blocks in the block diagram.

The above description is the preferred examples of the present disclosure and is not to limit the present disclosure. Any modifications, equivalent substitutions, improvements, etc., made within the spirit and principles of the present disclosure, should be included within the scope of protection of the present disclosure.

## Claims

1. A method for handling a link failure, performed by a target network apparatus which is in a networking and comprised in a forwarding path for forwarding a target flow based on flow entries; wherein each of network apparatuses in the networking advertises or forwards a host route of a computing resource accessed by the networking to other network apparatuses in the networking based on a dynamic routing protocol; wherein the method comprises:
receiving a first flow entry sent by a controller, wherein the first flow entry comprises a source network address, a destination network address, an egress interface, and information of a next hop apparatus of the target flow;
monitoring a status of a link associated with the first flow entry;
deleting, in response to detecting that the link associated with the first flow entry faults, the first flow entry; and
forwarding the target flow based on the destination network address of the target flow and a dynamic routing entry.

2. The method according to claim 1, further comprising:
sending, in response to determining that a route to the next hop apparatus is unreachable, an instruction to a previous hop apparatus in the forwarding path, so that the previous hop apparatus deletes a second flow entry for forwarding the target flow and forwards the target flow based on the destination network address of the target flow and a dynamic routing entry.

3. A method for handling a link failure, performed by a controller that enables each of network apparatuses in a networking to advertise or forward a host route of a computing resource accessed by the networking to other network apparatuses in the networking based on a dynamic routing protocol; wherein the method comprises:
determining information of a target flow to be processed, wherein the information of the target flow comprises a source network address and a destination network address of the target flow;
determining, based on a network-wide topology and quality information of respective links, a forwarding path for forwarding the target flow, wherein the forwarding path comprises M target network apparatuses and M-1 target links constructed by the M target network apparatuses; and
sending a forwarding flow entry to each of the M target network apparatuses, so that each of the M target network apparatuses forwards the target flow based on the forwarding flow entry, and forwards, in response to determining that a target link associated with a local forwarding flow entry faults, the target flow through the destination network address of the target flow and a dynamic routing entry; wherein the forwarding flow entry comprises the source network address, the destination network address, an egress interface, and information of a next hop apparatus of the target flow.

4. The method according to claim 3, wherein the determining information of a target flow to be processed comprises:
obtaining information of a mutual access traffic of a first artificial intelligence, AI, training task; and
determining the mutual access traffic of the first AI training task as the target flow to be processed, wherein information of a mutual access traffic of an AI training task comprises source computing resource network address information and destination computing resource network address information of the AI training task.

5. The method according to claim 3, wherein the determining information of a target flow to be processed comprises:
receiving information of a long tail latency task reported by the computing resource; and
determining a mutual access traffic of the long tail latency task as the target flow to be processed;
wherein in a case that a network interface card, NIC, of the computing resource detects a long tail latency of a second AI training task, the computing resource reports the information of the long tail latency task to the controller, and the information of the long tail latency task comprises source computing resource network address information and destination computing resource network address information in the second AI training task.

6. An apparatus for handling a link failure, applied to a target network apparatus which is in a networking and comprised in a forwarding path for forwarding a target flow based on flow entries; wherein each of network apparatuses in the networking advertises or forwards a host route of a computing resource accessed by the networking to other network apparatuses in the networking based on a dynamic routing protocol; wherein the apparatus comprises:
a receiving module, to receive a first flow entry sent by a controller, wherein the first flow entry comprises a source network address, a destination network address, an egress interface, and information of a next hop apparatus of the target flow;
a monitoring module, to monitor a status of a link associated with the first flow entry;
a deleting module, to delete the first flow entry in response to determining that the monitoring module monitors that the link associated with the first flow entry faults; and
a forwarding module, to forward the target flow based on the destination network address of the target flow and a dynamic routing entry.

7. The apparatus according to claim 6, further comprising a determination module and a sending module:
wherein in response to determining, by the determination module, that a route to the next hop apparatus is unreachable, the sending module is to send an instruction to a previous hop apparatus in the forwarding path, so that the previous hop apparatus deletes a second flow entry for forwarding the target flow and forwards the target flow based on the destination network address of the target flow and a dynamic routing entry.

8. An apparatus for handling a link failure, applied to a controller that enables each of network apparatuses in a networking to advertise or forward a host route of a computing resource accessed by the networking to other network apparatuses in the networking based on a dynamic routing protocol; wherein the apparatus comprises:
a first determination module, to determine information of a target flow to be processed, wherein the information of the target flow comprises a source network address and a destination network address of the target flow;
a second determination module, to determine, based on a network-wide topology and quality information of respective links, a forwarding path for forwarding the target flow, wherein the forwarding path comprises M target network apparatuses and M-1 target links constructed by the M target network apparatuses; and
a sending module, to send a forwarding flow entry to each of the M target network apparatuses, so that each of the M target network apparatuses forwards the target flow based on the forwarding flow entry, and forwards, in response to determining that a target link associated with a local forwarding flow entry faults, the target flow through the destination network address of the target flow and a dynamic routing entry; wherein the forwarding flow entry comprises the source network address, the destination network address, an egress interface, and information of a next hop apparatus of the target flow.

9. The apparatus according to claim 8, wherein in response to determining the information of the target flow to be processed, the first determination module is to:
obtain information of a mutual access traffic of a first artificial intelligence, AI, training task; and
determine the mutual access traffic of the first AI training task as the target flow to be processed, wherein information of a mutual access traffic of an AI training task comprises source computing resource network address information and destination computing resource network address information of the AI training task.

10. The apparatus according to claim 8, wherein in response to determining the information of the target flow to be processed, the first determination module is to:
receive information of a long tail latency task reported by the computing resource; and
determine a mutual access traffic of the long tail latency task as the target flow to be processed;
wherein in a case that a network interface card, NIC, of the computing resource detects a long tail latency of a second AI training task, the computing resource reports the information of the long tail latency task to the controller, and the information of the long tail latency task comprises source computing resource network address information and destination computing resource network address information in the second AI training task.

11. An apparatus for handling a link failure, comprising:
a memory, to storing program instructions; and
a processor, to execute the program instructions stored in the memory to implement the method according to any one of claims 1-2 or 3-5.

12. A computer-readable storage medium, storing computer executable instructions, wherein a computer executes the computer executable instructions to implement the method according to any one of claims 1-2 or 3-5.

13. A computer program product, comprising computer program instructions, wherein a computer executes the computer program instructions to implement the method according to any one of claims 1-2 or 3-5.
